# FASCICULE DE BREVET EUROPEEN

(11) **EP 2 007 622 B1**
(45) Date de publication et mention de la délivrance du brevet: **21.07.2010**
(21) Numéro de dépôt: 07727887.7
(22) Date de dépôt: 06.04.2007
(51) Int. Cl.: B64C 1/18

(54) **PLANCHER D'AERONEF, UTILISATION D'UN TEL PLANCHER ET TRONCON D'AERONEF MUNI D'UN TEL PLANCHER**
LUFTFAHRZEUGBODEN, VERWENDUNG DES BODENS UND MIT DEM BODEN AUSGESTATTETER LUFTFAHRZEUGABSCHNITT
AIRCRAFT FLOOR, USE OF SAID FLOOR AND AIRCRAFT SECTION FITTED WITH SAID FLOOR

(30) Priorité: 20.04.2006 FR 0651386
(43) Date de publication de la demande: 31.12.2008
(73) Titulaire: AIRBUS OPERATIONS (S.A.S), 31060 Toulouse (FR)
(72) Inventeur: RICAUD, Alexandre, 31210 Pointis De Riviere (FR); ROLLAND, Bernard, 31470 Fonsorbes (FR)
(74) Mandataire: Lebrette, Camille
(86) Numéro de dépôt international: PCT/EP2007/053419
(87) Numéro de publication internationale: WO 2007/122096

(56) Documents cités:
- EP-A- 1 564 141
- EP-A- 1 614 625
- DE-A1- 3 141 869
- DE-B- 1 060 264
- FR-A1- 2 689 851

## Description

L'invention concerne un plancher d'aéronef destiné à supporter de fortes charges. Plus précisément, l'invention concerne un plancher d'aéronef apte à reprendre les efforts transversaux auxquels il peut être soumis. Par efforts transversaux, on entend des efforts s'étendant transversalement par rapport à l'axe de l'aéronef muni d'un tel plancher. L'invention trouve des applications notamment pour la fabrication d'aéronefs destinés au transport de marchandises, lesdites marchandises étant arrimées sur le plancher de l'aéronef.

Dans le domaine du transport de marchandise, il est connu d'utiliser des aéronefs particuliers, dont le volume interne du fuselage est spécifiquement aménagé pour recevoir des marchandises encombrantes. Les marchandises sont arrimées sur le plancher de l'aéronef de manière à être maintenues en position quels que soient les efforts auxquels les marchandises vont être soumises. Plus précisément, les marchandises, généralement contenues dans des containers, sont posées sur le plancher et maintenues sur celui-ci par des éléments de structure s'étendant transversalement par rapport aux rails du plancher. Les containers sont maintenus en appui sur ces éléments de structure, qui bloquent les mouvements des containers dans le sens transversal. Lorsque les containers sont soumis à un mouvement transversal, les efforts correspondants sont transmis au plancher par l'intermédiaire des éléments de structure. Le plancher de l'aéronef doit donc être apte à reprendre l'ensemble des efforts transversaux auxquels il peut être soumis. Pour cela, les rails du plancher, qui s'étendent parallèlement à l'axe longitudinal de l'aéronef, sont montés fixes sur la structure primaire de l'aéronef. Par effort transversal, ou latéral, on entend un effort horizontal, s'étendant perpendiculairement à l'axe longitudinal de l'aéronef.

L'arrière-plan technologique est illustré par les documents DE-A-3141869 et EP-A-1564141.

Cependant, au niveau des tronçons d'aéronef munis des trains d'atterrissage de l'aéronef, la structure primaire de l'aéronef est trop éloignée des rails du plancher pour que lesdits rails puissent être fixés directement sur ladite structure primaire. Il est connu, afin de remédier à ce problème, d'utiliser des biellettes verticales reliant les rails à la structure primaire de l'aéronef. Dans les tronçons d'aéronef munis des cases de train d'atterrissage le plancher est donc un plancher articulé sur biellettes.

Un tel plancher articulé n'est pas apte à reprendre les efforts transversaux auxquels il peut être soumis. Aussi, il est connu de fixer les rails extérieurs, c'est-à-dire adjacents à la paroi latérale du fuselage, à ladite paroi latérale du fuselage de l'aéronef, au moyen de ferrures. Les ferrures relient ainsi les rails externes à la structure primaire latérale de l'aéronef, permettant le maintien latérale du plancher.

L'inconvénient de telles ferrures, dites ferrures anti-crash, est qu'elles tendent à augmenter la masse totale de l'aéronef. Dans le cas d'aéronef de grandes dimensions, dont le fuselage peut atteindre plusieurs dizaines de mètres de longueur, le nombre de ferrures anti-crash nécessaire au maintien latéral du plancher peut augmenter de manière non négligeable la masse totale de l'aéronef.

Dans l'invention, on cherche donc à fournir un plancher d'aéronef apte à reprendre les efforts transversaux auxquels ledit plancher peut être soumis, qui ne présente pas les inconvénients de l'état de la technique. Dans l'invention, on cherche également à réaliser un tel plancher spécifiquement adapté au tronçon d'aéronef muni de cases de trains d'atterrissage.

Pour cela, selon l'invention, on fait cheminer les efforts transversaux par un chemin différent de celui de l'état de la technique. Le chemin par lequel transitent les efforts transversaux du plancher selon l'invention nécessite la participation des panneaux plancher. Les panneaux plancher sont les structures de plancher disposées entre les rails longitudinaux du plancher, de manière à former une surface plane. Le plancher selon l'invention est muni de rails centraux montés rigidement sur une structure fixe de l'aéronef et de rails latéraux montés sur la structure de l'aéronef uniquement par l'intermédiaire de biellettes verticales. Les rails latéraux ne sont donc pas aptes à reprendre les efforts transversaux. Les rails latéraux sont disposés longitudinalement de part et d'autre des rails centraux et s'étendent parallèlement aux dits rails centraux. Des panneaux planchers sont disposés entre chaque paire de rails adjacents, à savoir deux rails latéraux ou deux rails centraux ou un rail latéral et un rail central. Lorsque le plancher selon l'invention est soumis à un effort transversal, l'effort est transmis de proche en proche en direction du point dur formé par les rails centraux rigides, par l'intermédiaire des panneaux plancher, lesdits rails centraux étant aptes à reprendre les efforts transversaux. Les efforts transversaux sont donc repris directement par les rails centraux montés rigidement sur la structure fixe de l'aéronef. Cette structure fixe est par exemple formée de traverses montées transversalement par rapport aux rails longitudinaux du plancher. Selon un exemple particulier de réalisation de l'invention, les rails centraux sont montés rigidement sur les traverses transversales par l'intermédiaire de dispositifs de fixation traversant. Par exemple, le dispositif de fixation traverse la traverse et le rail central destiné à y être fixé. De manière à pouvoir adapter le montage des rails centraux sur les traverses, il est possible de ménager des orifices oblongs sur les traverses. Les orifices oblongs s'étendent parallèlement aux rails centraux. Ainsi, il est possible de régler longitudinalement le montage des rails sur les traverses, de manière à s'affranchir de certaines contraintes de montage.

L'invention a donc pour objet un plancher d'aéronef selon la revendication 1.

Selon des exemples de réalisation du plancher d'aéronef selon l'invention, il est possible de prévoir tout ou partie des caractéristiques supplémentaires suivantes :
- le rail central est monté fixe sur au moins une traverse s'étendant transversalement audit rail ;
- la traverse est munie, à l'endroit de la zone de fixation du rail central, d'au moins un orifice de fixation oblong coopérant avec un orifice de fixation circulaire ménagé sur le rail central, de manière à régler longitudinalement la fixation du rail central sur la traverse ;
- la traverse est munie, à l'endroit de la zone de fixation du rail central, d'au moins un module de six orifices de fixation oblongs coopérant chacun avec un orifice de fixation circulaire d'un module de six orifices de fixation du rail central.

L'invention concerne également l'utilisation d'un plancher d'aéronef selon l'invention au niveau d'un tronçon d'aéronef comportant deux cases de train d'atterrissage. Conformément à l'invention, il est possible d'utiliser un tel plancher de manière à ce que les rails latéraux s'étendent le long du toit des cases de train d'atterrissage de l'aéronef, les bielles verticales reliant alors lesdits rails latéraux audit toit des cases de train d'atterrissage. Les rails centraux s'étendent eux le long de la structure centrale rigide de l'aéronef, bordée longitudinalement par les deux toits de cases de train d'atterrissage.

L'invention concerne également un tronçon d'aéronef comportant deux cases de train d'atterrissage et un plancher selon l'invention, dans lequel le plancher comporte une pluralité de rails centraux et une pluralité de rails latéraux disposés de part et d'autres des rails centraux et s'étendant parallèlement à l'axe de l'aéronef.

Selon des exemples de réalisation du tronçon d'aéronef selon l'invention, il est possible de prévoir tout ou partie des caractéristiques supplémentaires suivantes :
- les rails latéraux s'étendent le long du toit des cases de train d'atterrissage, les bielles verticales reliant lesdits rails latéraux audit toit des cases de train d'atterrissage;
- les cases de train d'atterrissage encadrent une zone centrale le long de laquelle s'étendent les rails centraux ;
- le tronçon d'aéronef comporte une pluralité de traverses s'étendant transversalement dans la zone centrale, les extrémités opposées de chaque traverse étant fixées à un toit de case de train d'atterrissage opposé.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une représentation schématique partielle d'un tronçon d'aéronef au niveau des cases de train d'atterrissage, muni d'un plancher selon l'invention ;
- Figures 2A et 2B : des représentations schématiques agrandies de certaines parties du plancher selon la Figure 1 ;
- Figure 3A et 3B: une coupe transversale et une représentation vue de dessus d'un plancher selon l'invention au niveau d'un rail central ;
- Figure 4A et 4B: une coupe transversale et une coupe longitudinale du plancher selon l'invention au niveau d'un rail latéral ;
- Figure 5 : une coupe longitudinale du plancher selon l'invention au niveau d'un rail latéral le plus externe.

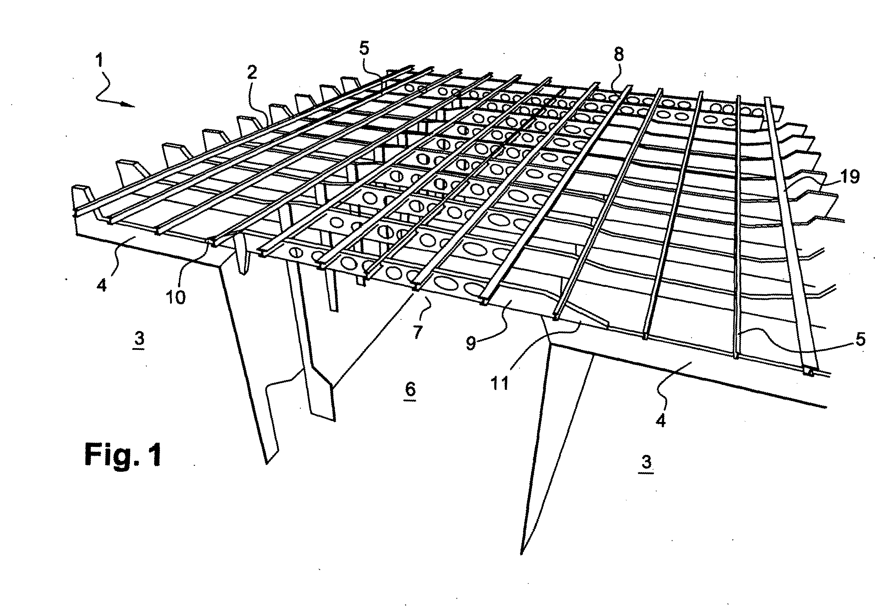

Sur la figure 1 est représenté schématiquement et partiellement un tronçon d'aéronef 1 au niveau de deux cases de train d'atterrissage 3. Les cases de train d'atterrissage 3 sont destinées à recevoir les trains d'atterrissage d'un aéronef en position repliée, c'est-à-dire lorsque l'aéronef est en vol. Les cases de train d'atterrissage 3 sont munies chacune d'un toit de case de train d'atterrissage 4 le long duquel des rails latéraux 5 s'étendent. Les rails latéraux 5 appartiennent au plancher 2 du tronçon 1.

Les deux cases de train d'atterrissage 3 sont séparées l'une de l'autre par une soute cargo 6. La soute cargo 6 délimite un volume inférieur, situé sous le plancher 2, qui peut servir également au transport de marchandises. Dans ce cas, par exemple, la soute cargo 6 peut être chargée de containers. Une zone centrale 7, située au-dessus de la soute cargo 6, comporte des rails centraux 8, s'étendant parallèlement aux rails latéraux 5. Dans l'exemple représenté à la figure 1, le tronçon d'aéronef 1 est muni de cinq rails centraux 8, lesdits rails centraux 8 étant bordés à droite et à gauche respectivement par quatre rails latéraux 5.

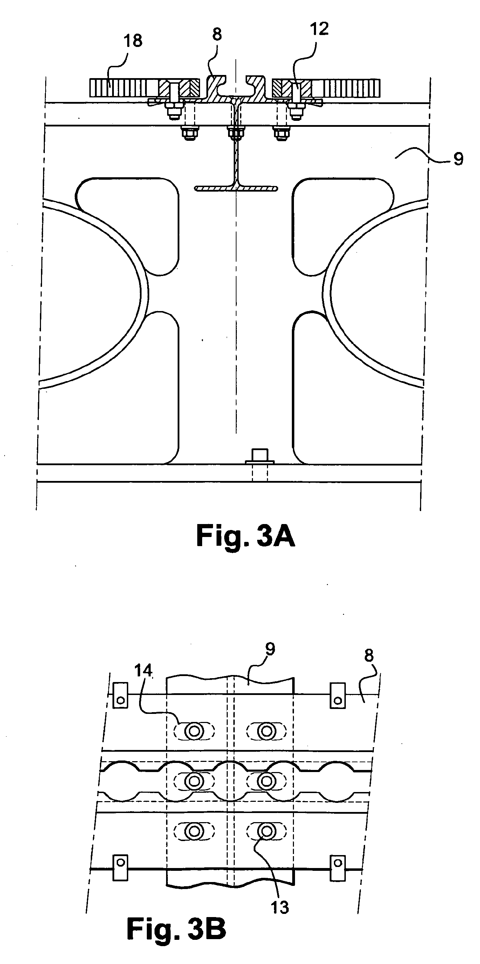

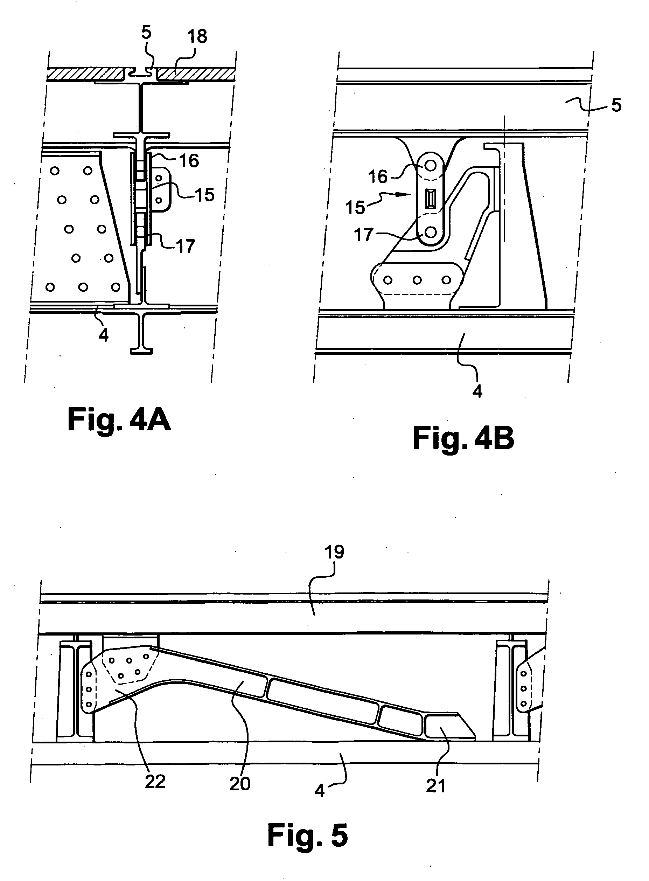

D'une manière générale, le plancher 2 comportent une pluralité de rails latéraux 5 et centraux 8 reliés directement ou indirectement à la structure primaire du tronçon 1 d'aéronef, ainsi qu'une pluralité de panneaux plancher 18 (figure 3A, 4A). Des panneaux plancher 18 sont intercalés entre chaque paire de rails adjacents de manière à former une surface plane sur laquelle les marchandises sont destinées à reposer. Chaque panneau plancher 18 est donc relié par un premier rebord longitudinal à une portion d'un premier rail et par un deuxième rebord longitudinal, parallèle au premier rebord longitudinal, à une portion d'un second rail, adjacent au premier rail. Par rebord longitudinal, on entend un côté du panneau plancher 18 s'étendant parallèlement aux rails. Entre deux rails adjacents, plusieurs panneaux plancher 18 sont disposés, les uns après les autres, parallèlement à l'axe longitudinal des rails. Il est également possible de prévoir des moyens de fixation pour relier chaque panneau plancher 18 aux panneaux plancher 18 situés devant et derrière.

Comme cela sera exposé plus en détail par la suite, les rails latéraux 5 sont montés sur les toits 4 des cases des trains d'atterrissage 3 correspondantes, tandis que les rails centraux 8 sont montés sur des traverses 9 s'étendant transversalement par rapport aux rails 5, 8, et parallèlement les unes aux autres. Chaque extrémité 10 et 11 des traverses 9 est montée rigidement sur le toit 4 d'une case de train d'atterrissage 3 opposée. Les traverses 9 sont fixes par rapport au toit 4 des cases de train d'atterrissage 3, et forment un point dur central.

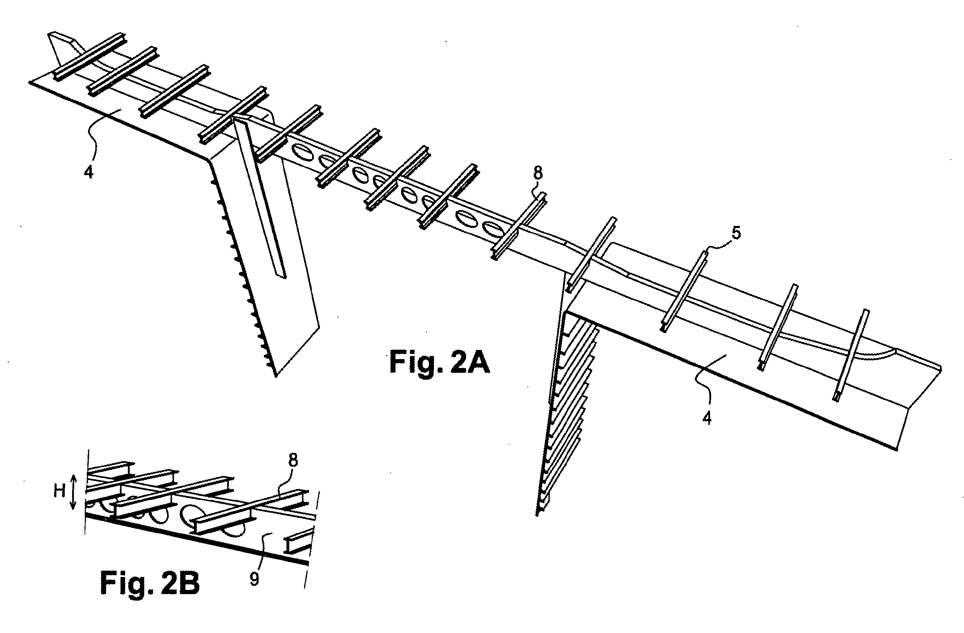

Chaque rail central 8 est monté rigidement sur plusieurs traverses 9 successives. Par exemple, et comme cela est représenté sur les figures 2A et 2B, les rails centraux 8 sont partiellement encastrés dans une hauteur H des traverses 9. Par hauteur H, on entend la dimension des traverses 9 s'étendant verticalement par rapport au toit 4 des cases de trains d'atterrissage 3. Les rails centraux 8 sont maintenus encastrés dans les traverses 9 par des dispositifs de fixation (non visibles sur les figures 2A et 2B), de sorte que lesdits rails centraux 8 sont maintenus en position par rapport à la structure de l'aéronef. Les rails centraux 8 sont maintenus fixes et immobiles sur la structure du tronçon 1 d'aéronef par l'intermédiaire des traverses 9, elles mêmes fixes et immobiles sur ladite structure.

Comme cela est représenté sur les figures 3A et 3B, un rail central 8 est fixé sur une traverse 9 par l'intermédiaire d'un dispositif de fixation. Le dispositif de fixation, tel que représenté par les figures 3A et 3B, comporte des vis 12 traversant des logements ménagés respectivement sur le rail 8 et sur la traverse 9. Préférentiellement, un logement ménagé sur la traverse 9 coïncide avec un logement ménagé sur le rail central 8. Ainsi, chaque vis 12 traverse un logement ménagé sur la traverse 9 et un logement ménagé sur le rail central 8.

Dans un exemple particulier, tel que représenté sur la figure 3B, le rail central 8 est fixé sur une traverse 9 par six vis de fixation 12. Les orifices 13 sont organisés en modules, ou ensembles, de six orifices sur le rail central 8. Les orifices 13 d'un même module s'étendent sur deux rangées de trois orifices 13 alignés, lesdites rangées étant parallèles entre elles et perpendiculaires à l'axe longitudinal du rail central 8. De même, les orifices 14 de la traverse 9 sont organisés en modules de six. Les six orifices 14 d'un même module s'étendent sur deux rangées de trois orifices 14 alignés, lesdites rangées étant parallèles entre elles et perpendiculaires à l'axe longitudinal du rail central 8, c'est à-dire parallèle à l'axe longitudinal de la traverse 9.

Les orifices 13 sur le rail central 8 sont circulaires cylindriques, tandis que les orifices 14 sur la traverse 9 sont oblongs. Plus précisément, une longueur de l'ovale des orifices oblongs 14 s'étend parallèlement à l'axe longitudinal du rail central 8. Par longueur de l'ovale d'un orifice oblong 14, on entend le plus grand diamètre dudit orifice oblong 14. Une telle orientation des orifices oblongs 14 par rapport au rail central 8 permet de régler longitudinalement la fixation du rail 8 sur la traverse 9. Préférentiellement, chaque orifice 14 de fixation sur une traverse 9, coïncidant avec un orifice 13 de fixation sur un rail central 8, est un orifice oblong s'étendant parallèlement à l'axe du rail central 8 correspondant. Ainsi, dans la mesure où chaque rail central 8 est fixé sur une pluralité de traverses 9 successives, on autorise, par le biais des orifices oblongs 14, un certain de jeu dans la liaison entre le rail central 8 et chacune des traverses 9, lors du montage des vis de fixation 12 dans les orifices 13, 14, ce qui permet d'introduire toutes les vis 12 dans les orifices 13, 14 sans difficulté. Une fois toutes les vis de fixation 12 montées dans les orifices 13, 14, on rend fixe la liaison entre le rail central 8 et les traverses 9 en serrant les vis 12, au moyen par exemple d'écrous.

Un des inconvénients de l'utilisation d'orifices oblongs 14 est le fait que ces orifices oblongs 14 sont susceptibles de faire passer des efforts perpendiculaires à la hauteur desdits orifices oblongs 14. Par hauteur, on entend la dimension de l'orifice oblong 14 s'étendant dans la hauteur H de la traverse 9. Les orifices oblongs 14 pourraient alors être soumis à des contraintes supérieures aux contraintes pouvant être supportées par le matériau formant la traverse 9. Cependant, contre toute attente, les tests réalisés pour vérifier la tenue mécanique de la liaison rail central 8 sur traverse 9, lorsque ladite liaison est soumise à des efforts transversaux, montrent que les orifices oblongs 14 sont aptes à résister aux contraintes que de tels efforts engendrent et à travailler de manière satisfaisante pour reprendre les efforts transversaux.

Par exemple, un test est réalisé en utilisant un rail central d'épaisseur 2,2 mm, dont les orifices circulaires ont un diamètre de 5 mm, et une traverse d'épaisseur 4 mm, dont les orifices oblongs ont des dimensions de 5,6 mm sur 10,6 mm. Par épaisseur, on entend la dimension s'étendant verticalement et perpendiculairement à l'axe longitudinal de l'élément considéré. La distance entre deux orifices adjacents sur la traverse ou le rail est de 24 mm. La distance la plus petite entre un orifice et un rebord de la traverse ou du rail muni dudit orifice est de 12 mm.

Des efforts transversaux ont été appliqués à un ensemble rail central / traverse présentant les caractéristiques ci-dessus. Les efforts transversaux ont été appliqués au moyen d'une machine hydraulique et conduits au moyen d'un dispositif électronique.

Les résultats de ces tests montrent que l'ensemble rail central / traverse ci-dessus peut résister à des efforts transversaux de l'ordre de 28 kN, alors même que la valeur maximale des efforts transversaux auxquels les rails de plancher peuvent être soumis dans un tronçon d'aéronef est de l'ordre 16 kN.

Les rails centraux 8 sont donc montés fixes sur la structure primaire du tronçon d'aéronef, par l'intermédiaire des traverses 9, interdisant ainsi tout débattement des rails centraux 8. Les rails centraux 8 sont aptes à reprendre des efforts transversaux, de mêmes que des efforts verticaux et longitudinaux. Par effort vertical, on entend perpendiculaire à la surface du toit 4 de case de train d'atterrissage. Par effort longitudinal, on entend parallèle à l'axe longitudinal des rails 8.

A l'inverse, et tel que cela est représenté sur les figures 4A et 4B, les rails latéraux 5 ne sont pas montés fixes sur la structure primaire du tronçon d'aéronef. En effet, les rails latéraux 5 sont trop éloignés de la surface du toit 4 des cases de train d'atterrissage 3, pour pouvoir être directement fixés sur lui. Aussi, chaque rail latéral 5, c'est-à-dire s'étendant le long des cases de train d'atterrissage 3, est relié au toit 4 des dites cases 3 par l'intermédiaire d'une bielle verticale 15 sur laquelle il est articulé. Chaque bielle verticale 15 est munie d'une extrémité haute 16 montée sur un rail latéral 5, et d'une extrémité basse 17 montée sur le toit 4 d'une case de train d'atterrissage 3 au-dessus de laquelle ledit rail latéral 5 s'étend. Les bielles 15 sont aptes à reprendre les efforts verticaux, mais pas les efforts transversaux ou longitudinaux.

Aussi, conformément à l'invention, lorsque le plancher 2 est soumis à des efforts transversaux depuis un rail latéral 5, lesdits efforts sont transmis de proche en proche depuis ce premier rail latéral 5 vers les rails latéraux adjacents, par l'intermédiaire des panneaux planchers 18 disposés entre chaque paire de rails adjacents, en direction du point dur formé par les rails centraux 8. Les efforts transversaux ainsi acheminés vers les rails centraux 8 sont repris au niveau desdits rails centraux 8 qui, comme exposé ci-dessus, sont aptes à reprendre de tels efforts.

Dans un exemple particulier, et tel que cela est représenté sur la figure 5, il est possible de relier le rail externe 19 au toit 4 d'une case de train d'atterrissage 3 par l'intermédiaire d'une ferrure 20 spécifique apte à reprendre, en plus des efforts verticaux, les efforts horizontaux. Ainsi, le rail externe 19 est à même de résister aussi bien à des chocs frontaux, tels que ceux dus à un crash, qu'aux turbulences et chocs verticaux dus à la charge des marchandises.

Pour cela, la ferrure 20 a une forme générale de type boomerang, c'est-à-dire en forme de Z. Plus précisément, la ferrure 20 s'étend transversalement dans un plan parallèle à l'axe du rail externe 19 et verticalement par rapport au toit 4 de la case de train 3. Une extrémité basse 21 de la ferrure 20 est solidaire du toit 4 de la case de train 3 et une extrémité haute 22 est solidaire du rail externe 19. La ferrure 20 est apte à encaisser les efforts horizontaux, parallèles au rail externe 19, du fait même de la géométrie de ladite ferrure 20 En effet, la ferrure 20 s'étend depuis l'arrière vers l'avant du tronçon d'aéronef. Par arrière et avant, on entend arrière et avant par rapport au sens d'avancement de l'aéronef comportant le tronçon 1 considéré. La ferrure 20 peut par ailleurs fléchir légèrement afin d'encaisser les chocs verticaux.

## Revendications

1. Plancher (2) d'aéronef comportant des rails centraux (8) montés fixes sur une structure rigide de l'aéronef, des rails latéraux (5) encadrant les rails centraux, les rails centraux et latéraux étant parallèles entre eux, chaque rail latéral étant relié à la structure de l'aéronef uniquement par des bielles verticales (15), et des panneaux planchers (18), chaque panneau plancher étant disposé entre deux rails adjacents de manière à ce que les efforts transversaux auxquels les rails latéraux sont soumis transitent par les panneaux plancher jusqu'aux rails centraux, au niveau desquels ils sont repris.

2. Plancher d'aéronef selon la revendication 1, **caractérisé en ce que** les rails centraux sont montés fixes sur au moins une traverse (9) s'étendant transversalement par rapport aux rails centraux.

3. Plancher d'aéronef selon la revendication 2, **caractérisé en ce que** la traverse est munie d'orifices de fixation oblongs (14) coopérant avec des orifices de fixation circulaires (13) ménagés sur les rails centraux, de manière à régler longitudinalement la fixation des rails centraux sur la traverse.

4. Plancher d'aéronef selon la revendication 3, **caractérisé en ce que** la traverse est munie d'au moins un module de six orifices de fixation oblongs (14) coopérant chacun avec un orifice de fixation circulaire (13) d'un module de six orifices de fixation d'un rail central.

5. Utilisation d'un plancher (2) d'aéronef selon l'une des revendications 1 à 4 dans un tronçon (1) d'aéronef comportant deux cases de train d'atterrissage (3).

6. Utilisation selon la revendication 5, dans laquelle les rails latéraux s'étendent le long du toit (4) des cases de train d'atterrissage, les bielles verticales (15) reliant lesdits rails latéraux audit toit des cases de train d'atterrissage.

7. Tronçon (1) d'aéronef comportant deux cases de train d'atterrissage et un plancher (2) selon l'une des revendications 1 à 4, ledit plancher comportant une pluralité de rails centraux (8) et une pluralité de rails latéraux (5) disposés de part et d'autre des rails centraux et s'étendant parallèlement à l'axe de l'aéronef.

8. Tronçon d'aéronef selon la revendication 7, **caractérisé en ce que** les rails latéraux s'étendent le long du toit des cases de train d'atterrissage, les bielles verticales reliant lesdits rails latéraux audit toit des cases de train d'atterrissage.

9. Tronçon d'aéronef selon l'une des revendications 7 à 8, **caractérisé en ce que** les cases de train d'atterrissage encadrent une zone centrale (7) le long de laquelle s'étendent les rails centraux.

10. Tronçon d'aéronef selon la revendication 9, **caractérisé en ce qu'**il comporte une pluralité de traverses (9) parallèles s'étendant transversalement dans la zone centrale, les extrémités opposées (10, 11) de chaque traverse étant fixées à un toit de case de train d'atterrissage opposé.

## Claims

1. An aircraft floor (2) comprising central rails (8) mounted, secured to a rigid aircraft structure, lateral rails (5), placed on either side of the central rails, the central and lateral rails being parallel to each other, each lateral rail being connected to the aircraft structure by vertical connecting rods (15) and floor panels (18) only, each floor panel being placed between two adjacent rails, in such a way that the transverse stresses to which the lateral rails are subject pass through the floor panels as far as the central rails, at which level they are recovered.

2. An aircraft floor according to claim 1, **characterised in that** the central rails are mounted, secured to at least one cross beam (9) extending transversally with regard to the central rails.

3. An aircraft floor according to claim 2, **characterised in that** the cross beam is fitted with oblong mounting holes (14) cooperating with the circular mounting holes (13) on the central rails in such a way as to longitudinally control the mounting of the central rails on the cross beam.

4. An aircraft floor according to claim 3, **characterised in that** the cross beam is fitted with at least one set of six oblong mounting holes (14), each hole cooperating with a circular mounting hole (13) of a set of six mounting holes on a central rail.

5. The use of an aircraft floor (2) according to one of claims 1 to 4 in a section (1) of an aircraft comprising two landing gear casings (3).

6. The use according to claim 5, wherein the lateral rails extend along the roof (4) of the landing gear casings, the vertical connecting rods (15) connecting said lateral rails to said roof of the landing gear casings.

7. A section (1) of an aircraft comprising two landing gear casings and a floor (2) according to one of claims 1 to 4, said floor comprising multiple central rails (8) and multiple lateral rails (5) placed on either side of the central rails and extending parallel to the aircraft axis.

8. A section of an aircraft according to claim 7, **characterised in that** the lateral rails extend along the roof of the landing gear casings, the vertical connecting rods connecting said lateral rails to said roof of the landing gear casings.

9. A section of an aircraft according to one of claims 7 to 8, **characterised in that** the landing gear casings are placed on either side of a central area (7) along which the central rails extend.

10. A section of an aircraft according to claim 9, **characterised in that** it comprises multiple parallel cross beams (9) extending transversally in the central area, the opposite ends (10, 11) of each cross beam being secured to a roof of the opposite landing gear casing.

## Patentansprüche

1. Boden (2) eines Luftfahrzeugs, mit mittleren Schienen (8), die fest auf einer steifen Struktur des Luftfahrzeugs montiert sind, wobei seitliche Schienen (5) die mittleren Schienen flankieren, und die mittleren Schienen und die seitlichen Schienen parallel zueinander liegen und jede seitliche Schiene nur durch senkrechte Verbindungsstangen (15) und Bodenpaneele (18) mit der Struktur des Luftfahrzeugs verbunden sind, und jede Bodenpaneele so zwischen zwei angrenzenden Schienen angeordnet ist, dass die Querkräfte, denen die seitlichen Schienen ausgesetzt sind, über die Bodenpaneele bis zu den mittleren Schienen übertragen werden, in deren Bereich sie übernommen werden.

2. Luftfahrzeugboden nach Anspruch 1, **dadurch gekennzeichnet, dass** die mittleren Schienen fest auf zumindest einer Traverse (9) befestigt ist, die sich normal zu den mittleren Schienen erstreckt.

3. Luftfahrzeugboden nach Anspruch 2, **dadurch gekennzeichnet, dass** die Traverse mit Befestigungslanglöchern (14) versehen ist, die mit den runden Befestigungslöchern (13) zusammenwirken, die in die mittleren Schienen gebohrt sind, sodass die Befestigung der mittleren Schienen auf der Traverse in Längsrichtung eingestellt werden kann.

4. Luftfahrzeugboden nach Anspruch 3, **dadurch gekennzeichnet, dass** die Traverse zumindest mit einem Modul bestehend aus sechs Befestigungslanglöchern (14) versehen ist, von denen jedes mit einem runden Befestigungsloch (13) eines Moduls mit sechs Bohrungen zur Befestigung einer mittleren Schiene zusammenwirkt.

5. Verwendung eines Luftfahrzeugbodens (2) nach einem der Ansprüche 1 bis 4 in einem Abschnitt (1) des Luftfahrzeugs, der zwei Fächer des Fahrwerks (3) enthält.

6. Verwendung nach Anspruch 5, bei der sich die seitlichen Schienen entlang der Abdeckung (4) der Fächer des Fahrwerks erstrecken, wobei die senkrechten Verbindungsstangen (15) die besagten seitlichen Schienen mit der Abdeckung der Fächer des Fahrwerks verbinden.

7. Abschnitt (1) des Luftfahrzeugs mit zwei Fächern des Fahrwerks und einem Boden (2) nach einem der Ansprüche 1 bis 4, wobei der besagte Boden eine Vielzahl an mittleren Schienen (8) und eine Vielzahl an seitlichen Schienen (5) enthält, die beiderseits der mittleren Schienen angebracht sind, und sich parallel zur Achse des Luftfahrzeugs erstrecken.

8. Luftfahrzeugabschnitt nach Anspruch 7, **dadurch gekennzeichnet, dass** sich die seitlichen Schienen entlang der Abdeckung der Fächer des Fahrwerks erstrecken, und die senkrechten Verbindungsstangen die besagten seitlichen Schienen mit der Abdeckung des Fahrwerks verbinden.

9. Luftfahrzeugabschnitt nach einem der Ansprüche 7 bis 8, **dadurch gekennzeichnet, dass** die Fächer des Fahrwerks eine mittlere Zone (7) flankieren, entlang derer sich die mittleren Schienen erstrecken.

10. Luftfahrzeugabschnitt nach Anspruch 9, **dadurch gekennzeichnet, dass** er eine Vielzahl an parallelen Traversen (9) enthält, die sich quer über die mittlere Zone erstrecken, und die gegenüber liegenden Enden (10, 11) jeder Traverse auf einer Abdeckung des gegenüber liegenden Fahrwerkfaches befestigt sind.
